# EUROPEAN PATENT SPECIFICATION

(11) **EP 2 468 800 B1**
(45) Date of publication and mention of the grant of the patent: **14.10.2015**
(21) Application number: 11190329.0
(22) Date of filing: 23.11.2011
(51) Int. Cl.: C08J 3/00, C08J 3/12, C08J 3/215, C08L 17/00, C08L 21/00, C08J 11/06

(54) **Method to produce polymer modified ground tire rubber**
Verfahren zur Herstellung eines polymermodifizierten gemahlten Reifengummis
Procédé de production de caoutchouc broyé de pneu modifié par un polymère

(30) Priority: 22.12.2010 US 425879 P
(43) Date of publication of application: 27.06.2012
(73) Proprietor: Rohm and Haas Company, Philadelphia, PA 19106-2399 (US)
(72) Inventor: Heulings, Harry R. IV, Maple Shade, NJ New Jersey 08052 (US); Lau, Willie, Lower Gwynedd, PA Pennsylvania 19002 (US)
(74) Representative: Hoggins, Mark Andrew

(56) References cited:
- EP-A1- 2 143 756
- EP-A1- 2 143 758
- EP-A2- 0 026 484
- DE-U1- 20 217 142
- US-A1- 2003 228 465
- US-A1- 2005 003 193
- US-A1- 2010 007 047
- US-A1- 2010 009 152
- US-A1- 2010 125 108

## Description

The present invention relates to methods of preparing shapeable compositions comprising thermoplastic polymer and vulcanizates, such as ground tire rubber, to the compositions made thereby, and to uses thereof. More specifically, the present invention relates to methods for forming shelf stable, fluidizable particles comprising thermoplastic polymer encapsulated vulcanizates from a waste stream, as well as to the fluidizable particles themselves, and to shaped articles made from the fluidizable particles.

Waste rubber or vulcanizate, such as ground tire rubber, may retain many of the mechanical properties of new rubber; however, effective means of re-using such waste has been generally been limited to fillers for pavement and ground cover for use in playgrounds or in landscaping materials. There remains a need to convert such waste vulcanizate to higher uses which capture more of the value of the materials in them.

US 2010/0009152 A1 discloses methods of making shapeable composites, wherein said method comprises combining a thermoplastic acrylic or vinyl polymer with a ground tyre rubber. The methods disclosed therein comprise mixing the polymer and ground tyre rubber with a coagulating agent such as FeCl₃ and large amounts of water to form a slurry which is then subjected to dewatering and thermoplastic processing.

Known surface modified solid crosslinked polymer particles, such as modified ground tire rubbers, have been made by in-situ polymerization and by coagulation of latex polymer in slurries. These methods can generate large amounts of polymer aggregate not associated with the rubber particles and so have not proven adequately efficient for large scale use. In addition, these methods often employ high concentrations of coagulant chemicals, thereby generating a waste water disposal problem.

For example, U.S. Patent no. 4269740, to Woods et al. discloses encapsulation of elastomer particles in a dilute aqueous slurry with a latex of preplasticized vinyl polymers in a method that comprises slowly adding a dilute aqueous solution of a coagulating agent to the combined slurry and latex and slowly coagulating the mixture, followed by filtering or separating solids from the water and hot air drying. Such methods are slow, hard to control and are prone to generating polymer aggregates as well as encapsulated particles. In addition, the methods use plasticizers, such as phthalates, benzoates and esters, which have proven expensive to use, tend to migrate to the surface of the particles, thereby compromising mechanical properties, and leading to dirt pick up, mildew formation and discoloration of resin matrices compounded with the particles.

Other known colored particulate resins made by methods comprising mixing a plasticizer, an organic solvent and a powdered colorant with a particulate resin, e.g. polyvinyl chloride, to form a colored particulate resin, followed by adding in a synthetic polymer emulsion and continuing mixing, with heating to form a colored particulate resin. While such a method enables use of conventional mixing equipment, it fails to provide fluidizable particles which can be stored for extended time periods prior to use and is limited to uses that require addition of plasticizers and organic solvents, both of which can destroy storage stability. The present inventors have endeavored to solve the problem of forming plasticizer-free fluidizable particles and shaped articles therefrom having a major proportion of waste rubber or waste vulcanizate in an efficient method that uses conventional mixing equipment and does not create a waste disposal problem.

The present invention, in its various aspects, is as set out in the accompanying claims.

According to the present invention, solid phase mixing (SPM) methods comprise mixing from 35 wt.% to 89.95 wt.%, preferably, 50 wt.% or more, or, preferably, up to 79.95 wt.%, based on total solids, of particles of one or more vulcanizate having a sieve particle size of from 10 to 800 µm, or, preferably, 400 µm or less, or preferably, 60 µ m or more, preferably, a waste vulcanizate, such as ground tire rubber, and 10 to 65 wt.%, based on total solids, or, preferably, 49.95 wt.% or less, or, preferably, 20 wt.% or more, of solids of one or more thermoplastic polymer in the form of an emulsion of a thermoplastic polymer in the presence of from 0.05 to 3.0 wt.%, preferably, 1.0 wt.% or less, based on total solids, of a passivating agent to form a moist mixture including thermoplastic polymer encapsulated vulcanizate having a total solids content of 65 wt.% or more, followed by drying the moist mixture to form fluidizable particles, wherein said passivating agent is selected from Ca(OH)₂,FeCl₃, Fe₂(SO₄)₃, FeSO₄, Al₂(SO₄)₃, MgSO₄ and mixtures thereof, and wherein no added water is present other than the water from the emulsion of said thermoplastic polymer. The moist mixture can be dried quickly at ambient or elevated temperature, preferably, in a fluid bed dryer.

In the solid phase mixing methods of the present invention, the vulcanizate and the emulsion of thermoplastic polymer, including any colorant, may preferably be mixed to form a moist mixture prior to adding and mixing in passivating agent.

Drying may be carried out in a fluid bed dryer or in a vacuum oven, or by drying under vacuum and heat with agitation, such as in a ribbon mixer.

In the methods of the present invention, the particles of vulcanizate may have been subject to grinding prior to mixing with an emulsion of thermoplastic polymer.

The methods of the present invention may further comprise thermoplastic processing the resulting fluidizable particles to form a shaped article, or granules or pellets for later use.

The methods the present invention may comprise forming a colored emulsion of one or more colorant, opacifying agent and/or infrared (IR) reflective pigment by mixing it with the emulsion of a thermoplastic polymer and one or more passivating agent, mixing the colored emulsion with the particles of vulcanizate to form colored fluidizable particles. Further, to grow larger colored fluidizable particles and/or to provide colored fluidizable particles of a desired color and multilayer fluidizable particles having an intermediate opaque layer, the colored fluidizable particles can be treated one or more additional times with a colored emulsion, followed by drying after all of the treatments. Alternatively, the particles can be dried after each treatment.

The method of the present invention results in substantially plasticizer free storage stable fluidizable particles comprising thermoplastic polymer encapsulated vulcanizate and having from 35 wt.% to 89.95 wt.%, preferably, 50 wt.% or more, or, preferably, up to 79.95 wt.%, based on total solids, of particles of one or more vulcanizate, from 10 to 65 wt.%, based on total solids, or, preferably, 49.95 wt.% or less, or, preferably, 20 wt.% or more of thermoplastic polymer, and from 0.05 to 3 wt.%, based on total solids, of one or more passivating agent. Such fluidizable particles may be chosen from colored fluidizable particles, infrared and solar reflective fluidizable particles, multilayer fluidizable particles containing three or more layers, low odor ground tire rubber (GTR) particles, and compatibilizer fluidizable particles for use in forming a compatibilized shaped article.

The method of the present invention may also provide shaped articles comprising thermoplastic processed substantially plasticizer free storage stable fluidizable particles, and, optionally, a matrix polymer or resin. In the case of compatibilized articles, the matrix polymer or resin is reactive with the compatibilizer fluidizable particle, such as, for example, a polyester, or active hydrogen containing vinyl resin or polymer that reacts with a carboxylic acid or salt functional compatibilizer fluidizable particle.

Unless otherwise indicated, any term containing parentheses refers, alternatively, to the whole term as if no parentheses were present and the term without them (i.e. excluding the content of the parentheses), and combinations of each alternative. Thus, the term "(meth)acrylic" refers to any of acrylic, methacrylic, and mixtures thereof.

All ranges are inclusive and combinable. For example, a proportion of from 1 to 65 wt.%, based on total solids, or, preferably, 50 wt.% or less, or, preferably, 40 wt.% or less, or, preferably, 10 wt.% or more, includes ranges of from 1 to 10 wt.%, from 1 to 40 wt.%, from 1 to 50 wt.%, from 1 to 65 wt.%, from 10 to 40 wt.%, from 10 to 50 wt.%, from 10 to 65 wt.%, from 40 to 50 wt.%, from 40 to 65 wt.%, and from 50 to 65 wt.%.

As used herein, the term "acrylic" refers to materials made from a major proportion of acrylate, methacrylate, acrylic or methacrylic acid or (meth)acrolein monomers, polymers or resins.

As used herein, the phrase "aqueous" includes water and mixtures comprising 50 wt.% or more of water in a mixture of water with water-miscible solvents.

As used herein, the phrase "colorant" means a colorant, pigment or dye.

As used herein, the phrase "emulsion of a thermoplastic polymer" refers to any two phase fluid wherein the continuous phase is aqueous and the disperse phase is a thermoplastic polymer, including emulsion polymerization products and polymers emulsified in water. The phrases "emulsion" and "dispersion" can be used interchangeably.

As used herein, the phrase "fluidizable particles" refers to any composition of particles, regardless of moisture content, that can be fluidized as individual particles in a fluid bed at room temperature and pressure without further drying the particles using the fluid bed or any other drying method.

As used herein, the term "major proportion" means 50 wt.% or more of a given material in a given composition.

As used herein, the term "multivalent" includes divalent or higher valent moieties.

As used herein, the term "polyester" means a condensation product of polymerizing lactones, or di- or higher functional carboxylic reactants with diols or polyols.

As used herein, unless otherwise indicated, the word "polymer" includes, independently, homopolymers, copolymers, terpolymers, block copolymers, segmented copolymers, graft copolymers, and any mixture or combination thereof.

As used herein, the term "sieve particle size" refers to the particle size of a material that would completely (∼100 wt.%) pass through a mesh sieve of the given particle size. For example, a sample of waste vulcanizate or GTR particles that completely pass through a 203 µm size sieve (60 mesh) is referred to as having a 203 µm sieve particle size. For a given material, a sieve particle size will be larger than the weight average particle size of the same material.

As used herein, the term "substantially plasticizer free" refers to a composition that has no added plasticizer, or which comprises less than 0.5 wt.%, or, preferably, less than 1000 ppm of any ester, phthalate, benzoate or other known plasticizer for polymers, based on the total soilds in the moist mixture.

As used herein, unless otherwise indicated, the term "glass transition temperature" or "Tg" refers to the glass transition temperature of a material as determined by Differential Scanning Calorimetry (TA Instrument model Q-1000) scanning between -90°C to 150°C at a rate of 20°C/min. The Tg is the inflection point of the curve.

As used herein, unless otherwise indicated, the term "calculated glass transition temperature" or "calculated Tg" refers to the glass transition temperature of a material as determined by the Fox Equation as described by Fox in Bulletin of the American Physical Society, 1, 3, page 123 (1956).

As used herein, the term "total solids" excludes liquids of any material or ingredient other than the ingredient for which the content is stated which may be part liquid. Thus, a mixture of 50 weight parts vulcanizate (at 100% solids), 0.75 weight parts passivating agent (at 100% solids), and 50 weight parts emulsion of a thermoplastic polymer (at 50% solids) comprises roughly 66%, based on total solids, of vulcanizate, 1%, based on total solids, of passivating agent and 33 %, based on total solids, of thermoplastic polymer even though the same mixture comprises about 49 wt.% emulsion of thermoplastic polymer, based on total solids.

As used herein, unless otherwise indicated, the term "weight average particle size" refers to the weight average particle size of a material as determined using a light scattering technique with a Malvern Mastersizer 2000^{™} Particle Size Analyzer (Malvern Instruments Ltd., Malvern, Worcestershire, UK). Materials can include particles which are coagulated or flocculated polymers and polymer agglomerates.

The SPM method of the present invention provides a single step process for up-cycling or re-purposing waste vulcanizate to uses as thermoplastics and colorants that creates minimal waste water and results in polymer encapsulation of vulcanizate particles with a minimal amount, e.g. less than 5 wt.%, based on the weight of the composition, of free polymer aggregates. In the SPM methods of the present invention, no added water is present other than the water from the emulsion of a thermoplastic polymer. Because no water is added, the method enables the production of fluidizable particles during mixing or after a short dry time. The methods do not require harsh coagulants, and enable the effective use of milder passivating agents, such as Ca(OH)₂. In addition, the passivating agent provides the fluidizable particles with stability toward agglomeration even at elevated temperature, thereby providing shelf stable particles that flow freely, i.e. that are fluidizable. Further, the methods allow one to use conventional mixing equipment to make fluidizable thermoplastic polymer particles, and therefrom shaped articles having the mechanical properties rubber without generating any waste material during processing. The fluidizable particles of the present invention can thus be made from ground, shredded or pulverized waste rubber vulcanizate particles without the need to co-grind or mill them with polymer to make the fluidizable particles. Some size reduction of the vulcanizate in advance of forming a moist mixture with polymer may be desirable for some purposes, such as production of fine colorants. Still further, the methods enable rapid production of low odor fluidizable particles from otherwise unpleasant smelling waste vulcanizates, such as GTR.

In the methods of the present invention, mixing may comprise simple mixing at ambient temperature. To avoid agglomeration of the vulcanizate particles or partly or fully encapsulated vulcanizate particles, low shear mixers, e.g. Hobart mixers, banbury mixers, with little or no heating may be used. Preferably, to enable mixing and drying, e.g. under devolatilization or vacuum in the mixer, the methods comprise mixing in a ribbon mixer.

Throughout the solid phase mixing of the present invention, the moist mixture can comprise as little as 5 wt.% liquid, e.g. water, based on the total weight of the moist mixture. In the methods of the present invention, the total solids content of the moist mixture is 65 wt.% or more, or, preferably, 70 wt.% or more, or, more preferably, 75 wt.% or more. Less drying time is needed for less moisture.

To produce fluidizable particles for use in thermoplastic processing, the moist mixtures in the methods of the present invention comprise 3 wt.% or less, or, more preferably, 1 wt. % or less of one or more passivating agent. Sieve particle sizes for the vulcanizate are not critical in fluidizable particles for use in thermoplastic processing and are from 10 to 800 µm. Sieve particle sizes should be small enough to permit thermoplastic processing to the form shaped articles, such as, for example, 500 µm films from particles that have a sieve particle size of 500 µm or less.

To make fluidizable particles having a higher percentage of primary particles, two or more layers of thermoplastic polymer material can be deposited on the vulcanizate particle. Such methods comprise mixing from 35 wt.% to 98.95 wt.%, preferably, 50 wt.% or more, or, preferably, up to 94.95 wt.%, based on total solids, of dry or moist fluidizable particles encapsulated in one layer of thermoplastic polymer with from 1 to 50 wt.%, based on total solids, or, preferably, 35 wt.% or less, or, preferably, 20 wt.% or less, or, preferably, 5 wt. % or more, of one or more emulsion of a thermoplastic polymer in the presence of 0.05 to 3 wt.%, preferably, 0.2 wt.% or more, or preferably, up to 1.0 wt.%, or, more preferably, up to 0.8 wt.%, based on total solids, of a passivating agent, and, optionally, one or more pigment or opacifying agent, to form a moist mixture including thermoplastic polymer encapsulated vulcanizate, followed by drying. The pigment r opacifying agent is preferably included in the emulsion of the thermoplastic polymer. Optionally, in the same manner of forming a moist mixture and drying and using the same proportions of materials, a third or fourth layer can be added to the resulting fluidizable particle having, respectively, two or three thermoplastic polymer layers.

Two or more layers of thermoplastic polymer are preferred where a colored or solar and IR reflective fluidizable particles are desired to fully mask the dark color of the vulcanizate particles.

Vulcanizate particle sizes can range as low as grinding and screening will make practicable and as high as will allow for thermoplastic processing to make shaped articles, such as films, with high melt strength and dimensionally consistent margins. Generally, thermoplastic processing permits vulcanizate sieve particle sizes to be as large as 800 µm. Mechanical grinding is sufficient to reduce the vulcanizate to a sieve particle size of 300 to 800 µm. To make fluidizable particles having sieve particle size sizes of 200 µm or less, it is desirable to pre-grind the vulcanizate or use pre-ground, e.g. cryoground, vulcanizate particles. Cryogrinding is desirable to reduce vulcanizate to a smaller sieve particle size. To achieve smaller sieve particle sizes, a ground or cryoground sample can be screened to eliminate larger particle fractions. Smaller particle sizes are preferred as they provide more surface area for coalescence of the thermoplastic polymer around the vulcanizate and, thereby, the thermoplastic polymer appears to more efficiently wet them than large sizes.

The solids proportions of vulcanizate in the methods of the present invention may range from 35 wt.% to 89.95 wt.%, based on total solids; with smaller particles requiring, for example, larger proportions of colorant, pigment or opacifying agent to get the same opacity as larger particles in colored fluidizable particles; and, with larger particles requiring as a minimum amount that proportion of thermoplastic polymer that will enable the fluidizable particles to form sufficient melt strength for thermoplastic processing.

Suitable vulcanizates can comprise, for example, GTR, styrene butadiene rubber (SBR), ethylene propylene-diene rubber (EPDM), butadiene rubber, natural rubber, mixtures thereof, and combinations thereof, including waste vulcanizates. Suitable waste vulcanizates can be obtained, for example, in shredded or milled form, or as cryogenically ground waste rubber. The waste rubber vulcanizate can comprise fillers and impurities, such as metal mesh fines.

The thermoplastic polymer may be present in fluidizable particle in the amount of 10-65 wt.%, based on total solids, preferably, 20 wt.% or more or up to 49.95 wt.%, to insure thermoplastic characteristics and adequate mechanical properties, such as tensile strength, and low temperature flexibility in shaped articles made therefrom.

In colored fluidizable particles, the amount of thermoplastic polymer may range from 5 to 50 wt.%, based on total solids, preferably, 10 wt.% or more, or, preferably, up to 30 wt.% for colored fluidizable particles to insure color fastness.

In the present invention, suitable thermoplastic polymers may comprise urethanes, polyesters, silicon containing polymers, or, preferably, any acrylic or vinyl polymer, such as acrylic-styrene polymers or styrene polymers. Preferred acrylic or vinyl polymers may be chosen from any polymer comprising the reaction product of 25 wt.% or more of an acrylic monomer. More preferably, the acrylic or vinyl polymer may be chosen from a emulsion copolymer, a polymer comprising the copolymerization product of a first acrylic or vinyl monomer having a measured glass transition temperature (Tg) of 20°C or less with a copolymerizable monomer having a Tg at least 20°C greater than the Tg of the first acrylic or vinyl monomer, and a metastable emulsion polymer, and mixtures thereof.

To achieve a balance of hardness and tensile properties in shaped articles made therefrom, such as films for roofing underlayment, with flexibility and cold weather resistance properties, thermoplastic polymers may comprise the copolymerization product of a first acrylic or vinyl monomer having a measured glass transition temperature (Tg) of 20°C or less, such as butyl acrylate (BA) or ethylhexyl acrylate (EHA), with a copolymerizable monomer having a Tg at least 20°C greater than the Tg of the first acrylic or vinyl monomer, such as methyl methacrylate (MMA) or styrene.

For making shaped articles having high tensile strengths, such as fiber or composite board, the fluidizable particles may comprise thermoplastic polymer having a Tg of 20°C or higher.

Passivating agents used in the present invention are selected from calcium hydroxide, or iron (ferric) chloride, i.e. FeCl₃, iron (ferrous) sulfate, i.e. Fe₂(SO₄)₃, FeSO₄, aluminum sulfate i.e. Al₂(SO₄)₃, magnesium sulfate, i.e. MgSO₄, and mixtures thereof. Preferably, the passivating agent is calcium hydroxide.

The passivating agents should be used in amounts such that they do not color or bleach the shaped articles or compositions made therefrom or impair melt flow and processing; however, they should be used in amounts such that they aid the coalescence of thermoplastic polymer around the vulcanizate and provide a passivating, anti-agglomeration effect. Suitable amounts range from 0.05 to 3.0 wt.%, preferably, 0.1 wt.% or more, or, preferably, up to 1.0 wt.%, or, more preferably, up to 0.8 wt.%.

To insure their effectiveness, passivating agents may be finely divided, so as to have a weight average particle size (determined by light scattering) of 600 µm or less, or, preferably, 400 µm or less, Coarser materials, such as alum, may be crushed or ground to a suitable particle size; or they may be dissolved in water or aqueous solvent.

Fluidizable particles may consist essentially of one or more thermoplastic polymer, one or more waste vulcanizate, one or more passivating agent and one or more colorant, including infrared (IR) reflective pigments, colored pigments and opacifying agents. Accordingly, to retain their thermoplastic nature during processing, the fluidizable particles omit crosslinking or curing agents, and thermosettable or curable resins or polymers. This does not mean that the fluidizable particles can not comprise functional groups that can be reacted with a matrix polymer or resin or emulsion polymer in later application.

Colored fluidizable particles comprise in their outer thermoplastic polymer, one or more colorant, and, optionally, an opacifying agent, and, further, may comprise one or more opacifying agent or visibly reflective pigment having a refractive index in air of 1.7 or more, or an IR reflective pigment in one or more intermediate thermoplastic polymer layer.

Colored fluidizable particles may have a single thermoplastic polymer layer which includes an opacifying agent, IR reflective inorganic pigment, or visibly reflective pigment having a refractive index in air of 1.7 or more. Such an agent or pigment may be combined with a colorant, pigment or dye, or a colorant having a refractive index in air of 1.7 or more.

Examples of fluidizable particles having two or more thermoplastic polymer layers are colored fluidizable particles having one or more first or intermediate opaque thermoplastic polymer layer and an outer colored thermoplastic polymer layer, solar and IR reflective fluidizable particles comprising one or more thermoplastic polymer layers each comprising IR reflective pigment. Preferably, in colored or reflective fluidizable particles, there are two or more thermoplastic polymer layers, wherein the first layer contains an opacifying agent to enhance color reflectance.

Solar and IR reflective fluidizable particles comprise one or more layer of thermoplastic polymer, with each such layer comprising an opacifying agent or IR reflective pigment.

Suitable opacifying agents are any having a refractive index in air of 1.7 or higher, such as TiO₂, zinc oxide, lithophone, antimony oxide, and hollow sphere or void containing polymer pigments.

Suitable IR reflective pigments may include, for example, Cool Color^{™} or Eclipse^{™} IR reflective pigments from Ferro (Cleveland, OH) or Ferro Green 24-10204 (Ferro, Cleveland, OH) or any pigment or colorant having a refractive index in air of 1.7 or more that reflect light in the infrared wavelength regions of 0.7 to 2.5 microns.

Colorants having a refractive index in air of 1.7 or more may include metal oxides having a refractive index in air of 1.7 or higher, such as red iron oxide.

Suitable thermoplastic processing can form either shaped articles, or materials, such as pellets, granules or powder, to be thermoformed later into a shaped article. Such thermoplastic processing effectively kneads and disperses the fluidizable particles, particularly with heating at any temperature that will sustain polymer flow during processing, for example, 100°C or above, and shapes them into a desired article. Thermoplastic processing may be chosen from extrusion, calendering with heating, calendering without heating combined with other thermoplastic processing, two roll milling, injection molding, compression molding, rotational molding and combinations thereof. For example, extrusion may be used to form granules, powders or pellets for later molding or calendering. Extrusion may be carried out in extruders chosen from devolatilizing extruders, i.e. to dry a slurry mixture or dewatered mixture, single screw extruders, twin screw extruders, counter rotating twin screw extruders, or combinations thereof. In another example, two roll milling can be followed by compressing molding to make shaped articles by thermoplastic processing. Preferably, thermoplastic processing comprises kneading in a two roll mill followed by compression molding.

Thermoplastic processing forms shaped articles, such as a sheet or film. For example, the fluidizable particles may be formed into multilayer articles by forming sheets or films and laminating the sheets or films with other sheets, films or lamina. Accordingly, the present invention provides multilayer shaped articles, such as laminates, wherein one or more layer comprises a thermoplastically processed product from the fluidizable particles of the present invention. For example, sheets and films made from fluidizable particles can be heat welded or laminated together or to sheets, scrims, webs and films of other materials. The shapeable composite materials and articles thereof can be heat sealed or adhered to other articles. Further, shapeable composites made as articles can be thermoplastically reshaped and re-processed.

Compositions for thermoplastic processing may additionally comprise various additives as desired or required according to their end use, such as, for example, one or more of vulcanizing agent, antioxidant, UV-stabilizer, polymeric, organic or inorganic fire-retardant, colorant, organic and inorganic filler, e.g. thermoset (cured) polymer or resin, in the form of, for example, powders, fibers, slivers or chips; reinforcing material, such as non-wovens, or scrims; pigment; thermosettable (curable) resin or polymer; processing aid, such as a mold release agent; or small amount of one or more surfactant. The additives can be added before or during thermoplastic processing.

Thermoplastic processing can comprise forming moldings, optionally with additional resins. Fluidizable particles may also be used to compatibilize a vulcanizate, such as waste vulcanizate, with a continuous phase polymer, or to functionalization the fluidizable particle through the design or the selection of the polymer coating thereon. Such compatibilized shaped articles comprise additional resins, e.g. polyesters, polyamides or polycarbonates which may not be compatible with vulcanizates, as well as fluidizable particles having functional groups, e.g carboxyl groups, reactive with the additional resins.

In another aspect of the present invention, fluidizable particles can be adapted to several end uses, such as thermoplastic resins or as fillers or colorants for a range of applications, including paints, coatings, sealants, caulks and molding compositions. For example, paint and coatings comprise fluid or latex polymers as well as fluidizable particles; sealants or caulks comprise fluid or latex polymers and fluidizable particles; and molding compositions comprise matrix polymers or resins as well as fluidizable particles. The fluidizable particles can be used as fillers or colorants in the amount of 1 to 300 parts, per hundred parts resin, polymer or latex.

Suitable used for the fluidizable particles include thermoplastic resins for shaped articles, colorants for paints, coatings, moldings and shaped articles, such as films for roofing underlayment or reflective granules in roofing shingles; colorants and fillers for clear caulks; texturizing agents for paints and thermoplastics; reinforcing fillers for concrete and cements, such as for use in external insulation finishing systems (EIFS).

Useful end product shaped articles include, but are not limited to, automotive parts, such as tires, bumpers, gaskets, fan belts, wiper blades, liners, vibration-dampening mounts, underbody coating, insulation and trim; building products such as roofing membranes, roofing shingles or roofing felt; modified EPDM roofing membranes; modified neoprene articles; tiles or tile backings; carpet backings; asphalt sealers, asphalt underlayment or reinforcement, and asphalt concrete road surfacing material; crack filler for asphalt and cement; concrete modification; sound proofing materials; acoustic underlayment; flooring underlayment and matting; industrial products such as liners for landfill; sports utilities such as artificial turf and track; playground surfaces; mats and pads; ball cores; and consumer products such as floor tiles; shoe soles; liners; covers; and other molded products.

The surface of the fluidizable particles, or shaped articles therefrom, e.g. as sheets, exhibit good adhesion to various substrates including, but not limit to, polyester scrim, acrylic film, polyester backing, aluminum foil, fiberglass, polyester wovens and webs. The surface also exhibits good adhesion characteristics to water based coatings and adhesives. Such adhesion property enables the simple formation of laminates, such as by coextrusion or contacting layers wherein one or more of the layers comprises shapeable composite material of the present invention.

EXAMPLES: The following examples illustrate the present invention.

The following materials were used in the Examples below:
GTR: Ground tire rubber in indicated sieve particle size (Edge Rubber, Chambersburg, PA);
Latex A is a styrene-butyl acrylate emulsion polymer having 43.5% solids and a measured Tg of ~5°C;
Latex B is a butyl acrylate-methyl methacrylate emulsion polymer having 50% solids, and a measured Tg of ~20°C;
Latex C is an butyl acrylate-methyl methacrylate emulsion polymer having 55% Solids, and a measured Tg~-10°C;
Al₂(SO₄)₃Aq. = 40 wt% solids in aqueous solution; and,
FeCl₃ Aq. = 40 wt% solids in aqueous solution.

Each of Examples 1 to 6, below, including 2-1 and 2A to 2G, contained 200 µm sieve particle size vulcanizate (GTR) and Examples 7-10 contained 600 µm sieve particle size vulcanizate (GTR). Further, Latex A was used in Examples 1, 2, 2A to 2G, 2-1 and 3 to 10; Latex B was used in Example 2F; and Latex C was used in Example 2G.

### Example 1, 1A and 2D: Comparative: Slurry Processing of Ground Tire Rubber and Latex Polymer

With the ingredients as depicted above, in the text following and in Table 1, below, polymer/rubber particles were prepared as follows: Water was added to a mixing vessel equipped with a mechanical stirrer; Ground tire rubber (GTR) having sieve particle size indicated above and in the proportion indicated in Tables 1 and 3, below, was added to the water with stirring until all the rubber particles were dispersed in the water phase to form a slurry. The polymer latex indicated above, in the proportion indicated in Tables 1 and 3, below, was added to the slurry and the stirring continued for 15 minutes to form a slurry mixture having 20wt% solids. Last, the passivating agent indicated in Tables 1 and 3, below, in the proportion indicated in Tables 1 and 3, below, was added to the slurry mixture. The coagulated polymer/rubber slurry mixture was allowed to equilibrate for 12 hours and was filtered using a 10 µm filtering sock to obtain a polymer/rubber solid mixture. The solid was washed three times with water through the filtering sock, and excess water was squeezed out. The resulting wet crumb is tested for wet compaction.

Another part of the resulting wet crumb was dried in a vacuum oven at ~25 mm/Hg at 60°C for 12 hours to yield a granular crumb mixture for further testing for dry Compaction and for thermoplastic processing. This is referred to as a crumb. The thermoplastic processing methods (TP Process) used are indicated in Tables 1 and 3, below.

### Examples 2 to 10: Solid Phase Mixing of Ground Tire Rubber (GTR) and Latex Polymer

To prepare fluidizable particles, the solid grade passivating agent indicated in Tables 1 and 3, below, in the solids proportions indicated in Tables 1 and 3, below, was mixed with the vulcanizate (GTR) having the sieve particle size indicated above, and in the solids proportions indicated in Tables 1 and 3, below, using a bench top Hobart Mixer. The GTR had the sieve particle size (600 µm = 30 mesh; 200 µm = 80 mesh) indicated below. The thermoplastic polymer, indicated above, in the form of an emulsion and in the solids proportions indicated in Tables 1 and 3, below, was added to the GTR mixture under ambient conditions. After mixing the components for 10 minutes, the product was collected as moist particles. No free water existed at this stage. These particles were tested for wet Compaction prior to drying.

In Examples, 1, 2A, 2B-1, 2C, 2D, 2E and 2G, the moist particles were dried with a bench top fluid bed drier (Retsch Inc., Newtown, PA) at 60°C for 20 minutes. The dried particles are free flowing solids and remain in that state after heated in a 60°C oven for 24 hours. In Examples 2, 2B, 2B-2, 2-1 and 3, with no passivating agent or that are not fluidizable after bench top drying, were dried by vacuum oven (~25 mm/Hg) at 60°C, broken up into chunks for thermal processing. For 2B and 2B-2, the solid Al₂(SO₄)₃ crystals were larger in size and needed to be pre-dissolved in water (40%) to become efficient in SPM. FeCl₃ was also added as 40% solution for similar reasons.

The dried particles are free flowing solids and remain as separate particles after being heated in a 60°C oven for 24 hours. The thermoplastic processing methods (TP Process) used are indicated in Tables 1 and 3, below.

### Com. M.: Compression Molding of Polymer Rubber Composite Sheet

The crumb of Example 1 and the fluidizable particles of Examples 2-4 and 7-9 (all having <5wt.% moisture content) were processed into sheets by fusing the particles in a two-roll mill. The particles were first processed by a counter rotating Two-Rolled Mill (152 mm x 330 mm Electrically Heated Two-Roll Mill, Collin, Ebersbery, Germany) at 180°C. The granular particles were fed to the top of the rollers, exiting at the bottom to complete one cycle, about 15 to 30 seconds. The resulting product was manually fed back to the top of the rollers, i.e. repeating the cycle, until it fuses into a sheet. The particles made by the slurry method generally require several cycles for the particles to fuse into a continuous sheet whereas the particles made by SPM fuse together in 1-2 cycles. After fusing into a sheet, the sheet was folded together and fed to the roller in repeated cycles, as above, until the folded material fused into a homogeneous sheet.

The fused material was subjected to compression molding by a Reliable heated Hydraulic Press(Reliable Rubber & Plastic Machinery Company, North Bergen, New Jersey). The material (250 g) after two-roll milling was placed between two steel plaques fitted with a 0.102, 0.127, or 0.203 cm thick (40, 50 or 80 mil thick), 25.4 cm by 25.4 cm (10 inches by inches) frame at 190°C for a total of 5 minutes: 1 minute at 3.45E7 Pascal, 1 minute at 6.89E7 Pascal and 3 minutes at 1.65E8 Pascal. The molded material was cooled under pressure at 1.65E8 Pascal in the mold at room temperature for 4.5 minutes in a 25°C cool press fitted with circulation water.

### Extrusion of Polymer Composite Sheet

The fluidizable particles of Examples 5, 6 and 10 were extruded by using a 19 mm single screw RS5000 system Haake/Brabender extruder (Haake Rheomex 254 Type: 001-990, Rheometer Services, Wall, NJ). There are three heating zones in the extruder: 160°C at the feed zone; 180°C in the mixing zone and 170°C at the die. The screw speed was adjusted between 60-100 rpm depending on the resins fed.

Test Methods: The Examples were tested, as follows:

Compaction Testing of Moist Fluidizable Particles or Crumb: To simulate the compaction of moist fluidizable particles at the bottom of a filled 55 gallon drum for irreversible agglomeration, based on the wet density of the fluidizable particle (484.4 kg m⁻³). The drum compaction pressure at the bottom of a filled drum = height x Density = (0.94 m x 484.4 kg m⁻³) or 455.3 kg m⁻². In the test, 400g moist fluidizable particles prepared by Examples 2 to 10 were sealed in a plastic bag and placed inside a PVC pipe (Height = 0.15 m, Diameter = 0.15 m). A flat bottom metal can was placed on top of the moist PRC granules. Under ambient conditions, a weight of 8.2 kg was positioned on top of the metal can to exert a constant pressure on the fluidizable particles for 7 days. Agglomeration was tested by physically breaking apart the granules suitable for fluidization by hand or by using a de-lumper. The samples passed the wet compaction test if the wet compacted lump could be physically broken apart by hand or with a de-lumper tool into granular form and be fluidized. The samples that failed the test compacted into a solid wet lump and could not be broken apart into fluidizable particles.

### Compaction Testing For Dry Fluidizable Particles or Crumb:

This test was designed to assess the resistance to irreversible agglomeration of the particles over time. A 0.47 liter metal can was overfilled with dried fluidizable particles. The metal lid was forced down onto the can to exert pressure onto the content. The can was placed in a 60°C oven for 24 hours. The content was tested by physically breaking apart the granules by hand or using a de-lumper tool suitable to allow them be fed to an extruder through a hopper.

Drying fluidization was tested by visual observation of solids lifting from the bottom of a fluid bed with air flow. To pass the drying test, for fluid bed drying, the product has to remain in particle form and powdery so that it can be lifted from the bottom of the fluid bed by a stream of hot (60°C) air. Using the Retsch Fluid bed dryer (Retsch Inc., Newtown, PA). When using a vacuum oven, the product passes the test if it can be broken apart into small chunks or granules by hand after drying in a pan under vacuum heat at 60°C and ∼25 mm/Hg after 12 hours.

### Mechanical Properties of Shaped Articles:

Tear Resistance: Was determined using the ASTM D-624 (2007) method. The shape of the test specimen was a notched die (Die Configuration C from ASTM D-624 Method) at a thickness of 0.077-0.128 cm (30-50 mil). The crosshead rate was set at 48.0 cm/minute (20.0 +/- 2.0 inch/minute). The reported results were the average measurements taken from three (3) samples.

Tensile Strength and Elongation at Break: Composite samples prepared by compression molding or extrusion were cut in a 1.26 x 10.24 cm (½" x 4") shape from the molded plaques, so that a sample having a width of about 1.2 cm, and a thickness of 0.077-0.128 cm (30-50 mil) was obtained. Mechanical testing was then carried out following the ASTM D2370 (1998) protocol on a Tinius Olsen H50KS tensile tester (Tinius Olsen Inc., Horsham, Pa). The crosshead rate was 2.56 cm/min (1.0 inches/minute), and a gauge length of 2.56 cm (1.0 inch) was used. The test was performed under controlled temperature at 23°C and controlled humidity of 50%. From this test, the elongation at break and the maximum strength (tensile strength) were determined. The results were reported as the average measurements taken from three (3) samples.

**Table 1: Fluidizable Particle Compositions And Mechanical Properties**

| **Example** | **Polymer/ Rubber Ratio¹** | **Additive** (% of solids) | **TP Process** | **TS Max (psi)** | **Elong. (%)** | **Tear Resistance** |
|---|---|---|---|---|---|---|
| **1*** | 35//65 | 1.05.% FeCl₃² | Com. M. | 714 | 349 | 168 |
| **2** | 35//65 | None | Com. M. | 1165 | 593 | 149 |
| **2A** | 35//65 | 0.525% Mg₂SO₄ | Com. M. | 488 | 85 | 185 |
| **2B** | 35//65 | 0.525% Al₂(SO₄)₃ | Com. M. | 827 | 311 | 127 |
| **2B**-**1** | 35//65 | 0.788% aq Al₂(SO₄)₃ | Com. M. | 722 | 269 | 174 |
| **2B**-**2** | 35//65 | 0.788% Al₂(SO₄)₃ | Com. M. | | | |
| **2C** | 35//65 | 0.525% aq FeCl₃ | Com. M. | 712 | 268 | 183 |
| **2D*** | 35//65 | 1.05% aq FeCl₃ | Com. M. | 582 | 175 | 195 |
| **2-1** | 35//65 | None | Com. M. | 869 | 339 | 201 |
| **2E** | 35//65 | 0.525% Ca(OH)₂ | Com. M, | 448 | 124 | 181 |
| **2F** | 35//65 Latex B | 0.525% Ca(OH)₂ | Com. M. | 632 | 168 | 153 |
| **2G** | 35//65 Latex C | 0.525% Ca(OH)₂ | Com. M. | 195 | 153 | 73 |
| **3** | 25//75 | None | Com. M. | 569 | 465 | 155 |
| **4** | 25//75 | 0.375% Ca(OH)₂ | Com. M. | 487 | 210 | 145 |
| **5** | 25//75 | 0.375% Ca(OH)₂ | Extrusion | 432 | 153 | 142 |
| **6** | 25//75 | 0.75% Ca(OH)₂ | Extrusion | 469 | 119 | 134 |
| **7** | 25//75 | None | Com. M. | 559 | 201 | 133 |
| **8** | 25//75 | 0.75% Ca(OH)₂ | Com. M. | 567 | 181 | 160 |
| **9** | 25//75 | 0.75% FeCl₃² | Com. M. | 592 | 188 | 177 |
| **10** | 25//75 | 0.75% Ca(OH)₂ | Extrusion | 235 | 79 | 101 |

| | | | | | | |
|---|---|---|---|---|---|---|
| * Crumb Slurry method (comparative); 1. Solids/solids. 2. Weight% based on total composite weight. | | | | | | |

As shown in Table 1, above, the methods of the present invention improve the mechanical properties of thermoplastic polymer composites with vulcanizate as shown in Examples 28 and 2C as compared with Example 2D. In part, this is due to the homogeneous encapsulation of the fluidizable particles made according to the methods of the present invention. Not shown in Table 1, the fluidizable particles are fully encapsulated by polymer as seen under an optical microscope and by scanning electron microscopy, with less than 5wt.% of free polymer granules (containing just polymer) observed under the microscope.

Compared to the slurry method used in Example 1, the inventive methods in Examples 4 to 10 reduced the processing steps to one mixing step from six , including preparing the polymer rubber mixture, coagulating the latex in the mixture, filtering, washing and squeezing (3 times) to one, i.e. merely mixing GTR, passivating agent and latex. The slurry method generated a large amount of waste water from the washing and filtering step, whereas the inventive method has no filtering and washing steps. Examples 2 and 3, without passivating agent were dried in a vacuum oven at ~25 mm/Hg and 60°C because agglomeration rendered it unsuitable for fluid bed drying.

**Table 2: Effect of Processing Additives**

| **Processing Additive Ca(OH)₂** | **Result on Fluidizable Particle** |
|---|---|
| None | Good extrusion melt flow. Poor shelf life with agglomeration of granules on heating and compaction |
| Medium (0.525% on total solids) | Good balance of mixing, consistency of granule for the fluid bed drying and extrusion characteristics. |
| High (1.05% on total solids) | Good processing, drying and shelf life. Poor extrusion characteristics. |

As shown in Table 2, above, to insure optimal processing and shelf life properties, the amount of passivating agent preferably ranges from about 0.1 to 0.8 wt.%, on a solids basis, in the moist mixture of the invention.

As shown in Table 2, above, from Example based on resins with a 35//65 weight ratio of latex A and GTR (seive particle size at 200 µm) The best balance of properties is achieved in using 0.525% of Ca(OH)₂ in the process.

In Table 3, below, the following additional testing was run:

Thermal Processing in a 2 Roll Mill: The number of cycles required for the dried particles or crumb passing through the rollers of a 2 roll mill to fuse into a cohesive sheet are indicated in Table 3, below.

As shown in Table 3, below, the fluidizable particles of inventive Examples 2, 2A to 2C, 2E to 2G and 3 to 10 were fused into a sheet much more efficiently in a two roll mill, i.e. in fewer cycles, than the comparative crumb of slurry Example 1. Further, only the fluidizable particles of Examples 2A-2G and 4-10 passed all of the compaction and drying fluidization tests. Thus, without passivation, the products are sticky to the mixer and blade, and any particles from them will not fluidize and will irreversibly be agglomerated into chunks that cannot be readily fed through a hopper into an extruder.

The particles of Examples 2B and 2B-2 were more sticky than other inventive examples because of the lack of surface area of the passivating agents in the form provided. In Examples 2B-1 and 2C, the passivating agents, performed well when dissolved in water so as to provide adequate surface area to have the desired particle fluidizing effect.

Example 2G failed compaction as it had an insufficient amount of passivating agent to enable shelf stability for the soft thermoplastic polymer (Latex C, Tg ∼10 deg.C) used.

**Table 3: Shelf Stability, Resistance to Agglomeration**

| **Example** | **Additive¹** | **H₂O³** | **TP²** | **Drying Fluidization** | **Thermal Processing 2 Roll Mill** | **Compaction (wet and dry)** |
|---|---|---|---|---|---|---|
| **1*** | 1.05% FeCl₃ | 80 | I | Pass | >4 cycles | Pass |
| **1A*** | 1.05% Ca(OH)₂ | 80 | I | ⁴ | | |
| **2** | None | 31 | I | Fail | 1-2 cycles | Fail |
| **2A** | 0.525% Mg₂SO₄ | 31 | I | Pass | 1-2 cycles | Pass |
| **2B** | 0.525% Al₂(SO₄)₃ | 31 | I | Fail | 1-2 cycles | Pass⁵ |
| **2B-1** | 0.788% Al₂(SO₄)₃ aq | 31 | I | Pass | -- | -- |
| **2B-2** | 0.788% Al₂(SO₄)₃ | 31 | I | Fail | 1-2cycles | Pass⁵ |
| **2C** | 0.525% aq FeCl₃ | 31 | I | Pass | 1-2cycles | Pass⁵ |
| **2D*** | 1.05% aq FeCl₃ | 31 | I | Pass | >4cycles | Pass |
| **2-1** | None | 31 | I | Fail | 1-2 cycles | Fail |
| **2E** | 0.525% Ca(OH)₂ | 31 | I | Pass | 1-2 cycles | Pass |
| **2F** | 0.625% Ca(OH)₂ | 26 | I | Pass | 1-2 cycles | Pass |
| **2G** | 0.525% Ca(OH)₂ | 21 | I | Pass | 1-2 cycles | Fail |
| **3** | None | 25 | I | Fail | 1-2 cycles | Fail |
| **4** | 0.3.375% Ca | 25 | I | Pass | 1-2 cycles | Pass |
| **5** | 0.375% Ca | 25 | II | Pass | 1-2 cycles | Pass |
| **6** | 0.75% Ca | 25 | II | Pass | 1-2 cycles | Pass |
| **7** | None | 25 | I | Pass | 1-2 cycles | Pass |
| **8** | 0.375% Ca | 25 | I | Pass | 1-2 cycles | Pass |
| **9** | 0.75% Fe | 25 | I | Pass | 1-2 cycles | Pass |
| **10** | 0.75% Ca | 25 | II | Pass | 1-2 cycles | Pass |

| | | | | | | |
|---|---|---|---|---|---|---|
| 1. Proportion is solids, based on total solids. Fe = FeCl₃; Ca = Ca(OH)₂. 2. TP Processing I = Two roll milling and Compression Molding; TP Processing II = Extrusion. 3. Moisture content in wt.% of total mixture in after mixing of GTR with polymer emulsion. For the slurry method at 20% solids, the solids are suspended as slurry in water. 4. The coagulation of the latex was incomplete and the mixture could not be filtered by a 10 micron filter sock. Un-coagulated latex polymer particles were lost through the filter. 5. These samples were sticky and required more effort to break apart into granules. * Crumb Slurry method (comparative). | | | | | | |

## Claims

1. A method for making shelf-stable fluidizable particles comprise mixing from 35 wt.% to 89.95 wt.%, based on total solids, of particles of one or more vulcanizate having a sieve particle size of from 10 to 800 µm, 10 to 65 wt.%, based on total solids, of one or more thermoplastic polymer in the form of an emulsion of a thermoplastic polymer in the presence of from 0.05 to 3 wt.%, based on total solids, of a passivating agent, to form a moist mixture including thermoplastic polymer encapsulated vulcanizate having a total solids content of 65 wt.% or more, followed by drying the moist mixture to form fluidizable particles, wherein said passivating agent is selected from Ca(OH)₂, FeCl₃, Fe₂(SO₄)₃, FeSO₄, Al₂(SO₄)₃, MgSO₄ and mixtures thereof, and wherein no added water is present other than the water from the emulsion of said thermoplastic polymer.

2. The method as claimed in claim 1, wherein the amount of the vulcanizate ranges 50 wt.% or more, based on total solids.

3. The method as claimed in claim 1, wherein the vulcanizate is a waste or recycled vulcanizate.

4. The method as claimed in claim 1, wherein the drying is carried out under vacuum and heat with agitation and fluidization.

5. The method as claimed in claim 4, wherein drying is carried out in a ribbon mixer.

6. A method for making a shaped article, granules or pellets comprising the method as claimed in claim 1, and further comprising thermoplastic processing the resulting fluidizable particles to form a shaped article, granules or pellets.

7. The method as claimed in claim 1, wherein the emulsion of a thermoplastic polymer comprises a colored emulsion of one or more colorant, opacifying agent and/or infrared (IR) reflective pigment to form colored fluidizable particles.

8. The method as claimed in claim 7, further comprising drying the colored fluidizable particles and then treating one or more additional times with a colored emulsion, followed by drying after each such additional treatment.

## Patentansprüche

1. Ein Verfahren zum Herstellen von lagerstabilen fluidisierbaren Partikeln, beinhaltend das Mischen von zu 35 Gew.-% bis 89,95 Gew.-%, bezogen auf den Gesamtfeststoffgehalt, Partikel aus einem oder mehreren Vulkanisaten mit einer Siebpartikelgröße von 10 bis 800 µm, zu 10 bis 65 Gew.-%, bezogen auf den Gesamtfeststoffgehalt, ein oder mehrere thermoplastische Polymere in Form einer Emulsion von einem thermoplastischen Polymer in Gegenwart von zu 0,05 bis 3 Gew.-%, bezogen auf den Gesamtfeststoffgehalt, ein Passivierungsmittel, um eine feuchte Mischung zu bilden, die in thermoplastisches Polymer eingekapseltes Vulkanisat mit einem Gesamtfeststoffgehaltanteil von 65 Gew.-% oder mehr umfasst, gefolgt von dem Trocknen der feuchten Mischung, um fluidisierbare Partikel zu bilden, wobei das Passivierungsmittel aus Ca(OH)₂, FeCl₃, Fe₂(SO₄)₃, FeSO₄, Al₂(SO₄)₃, MgSO₄ und Mischungen davon ausgewählt ist, und wobei abgesehen von dem Wasser von der Emulsion des thermoplastischen Polymers kein Zusatzwasser vorhanden ist.

2. Verfahren gemäß Anspruch 1, wobei die Menge des Vulkanisats, bezogen auf den Gesamtfeststoffgehalt, im Bereich von 50 Gew.-% oder mehr liegt.

3. Verfahren gemäß Anspruch 1, wobei das Vulkanisat Wasser oder recyceltes Vulkanisat ist.

4. Verfahren gemäß Anspruch 1, wobei das Trocknen unter Vakuum und Wärme mit Rühren und Fluidisieren durchgeführt wird.

5. Verfahren gemäß Anspruch 4, wobei das Trocknen in einem Bandmischer durchgeführt wird.

6. Ein Verfahren zum Herstellen von einem geformten Artikel, Granulaten oder Pellets, das das Verfahren gemäß Anspruch 1 beinhaltet, und das ferner das thermoplastische Verarbeiten der resultierenden fluidisierbaren Partikel, um einen geformten Artikel, Granulate oder Pellets zu bilden, beinhaltet.

7. Verfahren gemäß Anspruch 1, wobei die Emulsion von einem thermoplastischen Polymer eine gefärbte Emulsion aus einem oder mehreren Farbmitteln, Trübungsmitteln und/oder infrarotreflektierenden (IR-reflektierenden) Pigmenten, um gefärbte fluidisierbare Partikel zu bilden, beinhaltet.

8. Verfahren gemäß Anspruch 7, das ferner das Trocknen der gefärbten fluidisierbaren Partikel und dann das Behandeln für ein zusätzliches Mal oder mehrerer zusätzliche Male mit einer gefärbten Emulsion, gefolgt von dem Trocknen nach jeder solchen zusätzlichen Behandlung, beinhaltet.

## Revendications

1. Une méthode pour fabriquer des particules fluidisables de longue conservation comprend le fait de mélanger de 35 % en poids à 89,95 % en poids, rapporté aux matières solides totales, de particules d'un vulcanisat ou plus ayant une taille de particule déterminée par tamis totales, d'un polymère thermoplastique ou plus sous la forme d'une émulsion d'un polymère thermoplastique en présence de 0,05 à 3 % en poids, rapporté aux matières solides totales, d'un agent de passivation, afin de former un mélange humide incluant un vulcanisat encapsulé dans un polymère thermoplastique ayant une teneur en matières solides totales de 65 % en poids ou plus, suivi par le fait de sécher le mélange humide afin de former des particules fluidisables, dans laquelle ledit agent de passivation est sélectionné parmi Ca(OH)₂, FeCl₃, Fe₂(SO₄)₃, FeSO₄, Al₂(SO₄)₃, MgSO₄ et des mélanges de ceux-ci, et dans laquelle aucune eau ajoutée n'est présente autre que l'eau provenant de l'émulsion dudit polymère thermoplastique.

2. La méthode telle que revendiquée dans la revendication 1, dans laquelle la quantité du vulcanisat est comprise dans la gamme allant de 50 % en poids ou plus, rapporté aux matières solides totales.

3. La méthode telle que revendiquée dans la revendication 1, dans laquelle le vulcanisat est un vulcanisat de déchets ou recyclé.

4. La méthode telle que revendiquée dans la revendication 1, dans laquelle le séchage est effectué sous vide et chaleur avec agitation et fluidisation.

5. La méthode telle que revendiquée dans la revendication 4, dans laquelle le séchage est effectué dans un mélangeur à ruban.

6. Une méthode pour fabriquer un article conformé, des granules ou des pastilles comprenant la méthode telle que revendiquée dans la revendication 1, et comprenant en outre le fait de traiter de façon thermoplastique les particules fluidisables résultantes afin de former un article conformé, des granules ou des pastilles.

7. La méthode telle que revendiquée dans la revendication 1, dans laquelle l'émulsion d'un polymère thermoplastique comprend une émulsion colorée d'un colorant ou plus, d'un agent opacifiant et/ou d'un pigment réfléchissant les infrarouges (IR) afin de former des particules fluidisables colorées.

8. La méthode telle que revendiquée dans la revendication 7, comprenant en outre le fait de sécher les particules fluidisables colorées, puis de traiter une plusieurs fois supplémentaires avec une émulsion colorée, suivi du séchage après chaque traitement supplémentaire de la sorte.
